# EUROPÄISCHE PATENTSCHRIFT

(11) **EP 0 912 391 B1**
(45) Veröffentlichungstag und Bekanntmachung des Hinweises auf die Patenterteilung: **03.05.2000**
(21) Anmeldenummer: 97940013.2
(22) Anmeldetag: 22.07.1997
(51) Int. Cl.: B62K 25/28

(54) **FAHRRADRAHMEN**
BICYCLE FRAME
CADRE DE BICYCLETTE

(30) Priorität: 22.07.1996 DE 19629559
(43) Veröffentlichungstag der Anmeldung: 06.05.1999
(73) Patentinhaber: Storck, Markus, 65520 Bad Camberg (DE)
(72) Erfinder: Storck, Markus, 65520 Bad Camberg (DE)
(74) Vertreter: Wallinger, Michael, Dr.-Ing.
(86) Internationale Anmeldenummer: EP9703959
(87) Internationale Veröffentlichungsnummer: WO9803390

(56) Entgegenhaltungen:
- EP-A- 0 493 773
- EP-A- 0 574 613
- EP-A- 0 723 907
- WO-A-93/13974
- DE-U- 9 405 076

## Beschreibung

Die vorliegende Erfindung betrifft einen Fahrradrahmen, und zwar einen Fahrradrahmen, bei dem wenigstens das Hinterrad gegenüber dem Rahmen gefedert ist.

Insbesondere die Entwicklung der Mountainbikes hat zu einer vermehrten Nachfrage nach gefederten Fahrradrahmen geführt. Der erste Schritt zur Verwendung von gefederten Fahrradrahmen war die Entwicklung von Federgabeln für das Vorderrad, welche eine Relativbewegung zwischen dem Anlenkpunkt der Vorderachse an der Gabel und dem Gabelrohr, welches im Steuerrohr eines Fahrradrahmens geführt wird, ermöglichen. Nachdem bereits die Einführung der Federgabeln einen erheblichen Gewinn an Fahrsicherheit und Fahrkomfort brachte, wurde der Entwicklung gefederter Hinterradrahmen vermehrte Aufmerksamkeit zuteil.

Aus der WO 93/13974, die zur Würdigung des Oberbegriffes herangezogen wurde, ist ein System zur Federung des Hinterrades von Fahrrädern bekannt. Oberhalb des Tretlagers werden die vorderen Enden der Kettenstreben drehbar angelenkt. An den hinteren Enden der Kettenstreben sind die Ausfallenden drehbar angeordnet, welche fest mit den Sitzstreben verbunden sind. An dem oberen Ende der Sitzstreben sind diese mit einem ersten Ende einer Federungseinrichtung verbunden, deren zweites Ende an dem Sitzrohr drehbar angelenkt ist.

Die Hinterradachse wird in Aussparungen an den Ausfallenden angebracht. Nachteilig bei dieser Anordnung ist, daß bei einer Federungsbewegung des Rades sich der Abstand zwischen Tretlagerachse und Hinterradachse ändert, was eine Veränderung des Kettenweges bewirkt und zu für den Fahrer störenden Vibrationen und Schlägen in den Pedalen führt.

Aus der G 94 05 076.7 betrifft ein Fahrrad, bei welchem das Hinterrad federnd gelagert ist. Sitzstreben, Ausfallenden und Kettenstreben sind einstückig ausgeformt und an dem vorderen Ende der Kettenstreben drehbar um die Tretlagerachse gelagert. Das obere Ende der Sitzstreben ist drehbar an einem Umlenkmechanismus angebracht, welches mit einer Federeinrichtung verbunden ist.

Ein Nachteil dieser Anordnung ist die fehlende Flexibilität, da Kettenstreben, Ausfallenden und Sitzstreben einstückig gearbeitet sind. Ein weiterer Nachteil ist, daß bei wechselnder Kettenlast das Hinterrad Federbewegungen ausführt, welche insbesondere beim Wiegetritt an Bergen auch auf ebenen Straßen zu störenden Bewegungen des Hinterrades führen.

Die EP-0 493 773 A2 betrifft ein gefedertes Fahrrad, bei welchem die Kettenstreben drehbar um die Tretlagerachse angeordnet sind. Ein Nachteil dieser Anordnung ist die schon oben erwähnte Federbewegung des Rades bei wechselnder Kettenlast. Deshalb ist bei diesem System eine Behinderungseinrichtung und eine Sperreinrichtung angeordnet, welche über einen Antriebskraftfühler gesteuert wird und ein automatisches Sperren bei zunehmender Pedalkraft ermöglicht, um die störenden Federbewegungen bei wechselnder Last zu unterbinden.

Die EP-0 574 613 A1 betrifft einen Fahrradrahmen, bei welchem das Hinterrad gefedert wird. Die Kettenstreben sind drehbar um einen Anlenkpunkt gelagert, welcher sich auf der Höhe des Tretlagers auf der dem Hinterrad zugewandten Seite befindet. Auch diese Anordnung führt zu Federbewegungen des Hinterrades bei wechselnder Kettenlast.

Die EP-0 723 907 A1 hat als Gegenstand ein System zur Federung eines Fahrrades. Die Kettenstreben werden durch zwei Drehpunkte, welche unterhalb des Tretlagergehäuses angeordnet sind, drehbar gelagert, so daß auch diese Anordnung zu Federbewegungen des Hinterrades führt, wenn die Kettenlast wechselt.

Federbewegungen bei wechselnder Kettenlast ebenso wie die Kettenschläge durch eine Änderung des Abstandes zwischen Tretlagerachse und Hinterradachse schränken den Fahrkomfort für den Fahrer ein.

Bei der Entwicklung von Federungen für das Hinterrad eines Fahrrades sind mehrere konstruktive Ziele in Übereinstimmung zu bringen. So muß einerseits die Gesamtanordnung sehr leicht sein, da ein schweres Fahrrad unhandlich und im sportlichen Einsatz unbrauchbar wird. Weiterhin muß sichergestellt sein, daß ausreichend Federweg zur Verfügung steht, um auch bei stärkeren Geländeunebenheiten ein Springen des Hinterrades, welches die Fahrstabilität wesentlich beeinträchtigt, zu verhindern. Weiterhin muß die Hinterradfederung derart beschaffen sein, daß sie das Hinterrad zuverlässig führt, so daß die Stabilität, die durch die Federung gewonnen wird, nicht durch eine unzuverlässige Hinterradführung wieder verloren wird.

Schließlich sollte eine Hinterradfederung auch verstellbar sein, um eine einfache Anpassung an verschieden schwere Benutzer oder auch an verschiedene Geländearten zu ermöglichen.

Der vorliegenden Erfindung liegt die Aufgabe zugrunde, eine Hinterradfederung der in Rede stehenden Art zu schaffen, bei welcher ein besonders hohes Maß an Komfort und Fahrsicherheit gewonnen wird, ohne daß die Richtungsstabilität des Hinterrades beeinträchtigt wird.

Diese Aufgabe wird erfindungsgemäß durch den Gegenstand des Anspruches 1 gelöst.

Zu bevorzugende Weiterbildungen der Erfindung sind Gegenstand der Unteransprüche.

Beim erfindungsgemäßen Fahrradrahmen ist ein Sitzrohr vorgesehen, dessen oberes Ende offen ist, so daß eine Sattelstütze eingeschoben werden kann. Am unteren Ende ist ein Tretlagergehäuse angeordnet und vorzugsweise mit dem Sitzrohr verlötet, verschweißt oder verklebt.

Oberhalb dieses Tretlagergehäuses und bevorzugt so nah wie möglich an diesem befindet sich ein Anlenkpunkt für zwei Kettenstreben, welche beim montierten Fahrrad zur linken und zur rechten Seite des Hinterrades angeordnet sind und welche mit einem Ausfallende verbunden sind, das die Hinterradachse, vorzugsweise mit einer üblichen Klemmeinrichtung, aufnimmt.

Die Drehachse des ersten Anlenkpunktes am Sitzrohr ist vorzugsweise exakt auf der Mittellinie des Sitzrohres angeordnet.

Die drehbare Verbindung zwischen Kettenstreben und dem Sitzrohr erfolgt vorzugsweise mittels Wälzlager, und zwar mittels Nadellager zur Aufnahme der Radialkräfte und zweier Axiallager zur Aufnahme der Axialkräfte.

Die Verwendung der Axiallager, vorzugsweise Axialwälzlager, ermöglicht eine hohe Vorspannkraft zwischen den sich relativ zueinander bewegenden Teilen, so daß eine enge und weitgehend spielfreie Führung der Kettenstreben am Sitzrohr möglich ist.

Das Ausfallende ist vorzugsweise ein separat gefertigtes Teil, welches jeweils mit der im wesentlichen rohrförmigen Kettenstrebe verschweißt, verlötet oder verklebt wird.

Am Ausfallende, und zwar vorzugsweise oberhalb der Aufnahme für die Achse des Hinterrades ist der zweite Anlenkpunkt angeordnet, wobei an jeder Kettenstrebe jeweils ein Anlenkpunkt vorgesehen ist, so daß sich insgesamt ein im wesentlichen symmetrischer Aufbau in bezug auf das Hinterrad ergibt.

Am Ausfallende ist der Anlenkpunkt durch eine Bohrung definiert, die die eigentliche Lagereinheit aufnimmt. Auch bei diesem Anlenkpunkt wird vorzugsweise eine Kombination von Nadellager zur Aufnahme der Radialkräfte und Axiallager, und zwar auch hier Axialwälzlager zur Aufnahme der axialen Kräfte verwendet. Auch hier hat die Verwendung der Axialwälzlager den Vorteil, daß hohe Vorspannkräfte und damit eine gute und weitgehend spielfreie Führung möglich sind.

Der zweite Anlenkpunkt am hinteren Ausfallende ist der Verbindungspunkt zwischen den beiden Kettenstreben und den Sitzstreben. Die Sitzstreben sind über diesen zweiten Anlenkpunkt drehbar mit dem Ausfallende verbunden und über einen dritten Anlenkpunkt indirekt mit dem Sitzrohr verbunden. Indirekt deshalb, weil keine unmittelbare Verbindung zwischen Sitzstreben und Sitzrohr gegeben ist, sondern weil eine noch erläuterte Wippe zur Verbindung mit dem Sitzrohr vorgesehen ist.

Die Verbindung zwischen den Sitzstreben und der Wippe erfolgt über Kugelgel-enke, so daß eine Verspannung innerhalb des Hinterradbaus verhindert werden kann.

Erfindungsgemäß weist die Wippe drei Wippenanlenkpunkte auf, nämlich den bereits genannten ersten Wippenanlenkpunkt, an dem die Sitzstreben gelenkig angelenkt sind und einen zweiten Wippenanlenkpunkt, an welchem Wippe und Sitzrohr miteinander verbunden sind. Dieser Anlenkpunkt ist am Sitzrohr, und zwar an dessen hinterer, dem Hinterrad zugewandten Seite oberhalb des ersten Anlenkpunktes angeordnet.

Die Wippe hat einen dritten Wippenanlenkpunkt, an welchem sie gelenkig mit einem Feder-Dämpfungselement verbunden ist. Auch hier werden vorzugsweise Kugelgelenke verwendet. Das Feder-Dämpfungselement ist vorzugsweise parallel am Sitzrohr und vor diesem, d. h. auf der dem Hinterrad abgewandten Seite angeordnet. Das Feder-Dämpfungselement ist über eine Befestigungseinrichtung mit dem Rahmen verbunden.

Vorzugsweise ist der Rahmen von konventionellem Aufbau ist, d. h. er weist ein Sitzrohr, welches vom Tretlager aus gesehen schräg nach hinten zum Hinterrad geneigt ist, ein mit dem Sitzrohr verbundenes Oberrohr, ein mit dem Tretlagergehäuse verbundenes Unterrohr und ein Steuerrohr, welches das Gabelrohr der Vorderradgabel aufnimmt, auf.

In diesem Fall werden als Befestigungseinrichtung zwei Platten verwendet, die mit dem Sitzrohr und dem Unterrohr sowie ggf. auch mit dem Tretlagergehäuse verbunden sind und eine zusätzliche Versteifung bewirken.

Auch bei dem letztgenannten Verbindungspunkt des Feder-Dämpfungselementes mit dem Rahmen werden vorzugsweise Kugelgelenke eingesetzt.

Die erfindungsgemäße Lösung hat eine Reihe von wesentlichen Vorteilen.

Der Aufbau ist weitgehend an den Aufbau eines bekannten Diamantrahmens angelehnt, so daß die bekannte Dimensionierung z. B. von Sitzrohr usw. erhalten bleibt. Das durchgehende Sitzrohr hat den Vorteil, daß das durch die Sattelstütze auf das Sitzrohr übertragene Drehmoment über eine große Länge des Sitzrohrs aufgenommen werden kann.

Die Anordnung hat weiterhin den Vorteil, daß die Höhenverstellung des Rahmens beim Einfedern weitgehend ohne Einfluß auf die Kettenspannung ist. Die in der Kette wirkende Kraft, die eine Verspannung zwischen Tretlager und der Hinterradachse bewirkt, hat somit nur wenig Einfluß auf die Feder/Dämpfungseigenschaften des Hinterbaus.

Aufgrund der verwendeten Geometrie und auch der vorzugsweise verwendeten Lagerelemente ergibt sich eine sehr steife Seitenführung des Hinterrades, wodurch die Fahrstabilität wesentlich verbessert wird.

Die Verwendung der Wippe erlaubt es schließlich, das Feder-Dämpfungselement parallel zum Sitzrohr anzubringen, was von besonderem Vorteil für dessen Verstellbarkeit ist.

Die Abmessung des Hinterbaus sind unabhängig von der Rahmengröße, vorausgesetzt, daß die üblichen Felgen-und Reifendurchmesser verwendet werden. Zieht man von der (fiktiven) Drehachse des Tretlagers eine Verbindungslinie zur Drehachse des Hinterrades und bezeichnet diese Verbindungslinie als x-Achse, und errichtet eine y-Achse senkrecht zu dieser x-Achse, ergibt sich ein karthesisches Koordinatensystem zur Beschreibung der einzelnen Anlenkpunkte, bei welchem das Tretlager den Vorsprung bildet und der Raddrehpunkt definitionsgemäß den y-Wert 0 einnimmt.

Eine besonders günstige Konfiguration bei Anlenkpunkten, die ein optimales Dämpfungs-/Federverhalten des Hinterbaus ermöglicht, wurde mit folgenden Werten gefunden, wobei die Koordinaten immer die fiktiven Drehachsen angeben. Es ist weiter vorausgesetzt, daß der Koordinatenabschnitt zwischen Tretlager und Hinterradachse positiv und der links davon angeordnete Koordinatenabschnitt der x-Achse negativ ist.

Danach ergeben sich folgende zu bevorzugende Koordinatenwerte in mm:

| | | |
|---|---|---|
| Tretlager-Drehachse | x = 0 | y = 0 |
| | | |
| Hinterrad-Drehachse | x = 430 | y = 0 |
| | | |
| Zweiter Anlenkpunkt (Ausfallende des Hinterrades) | x = 413 | y = 47 |
| | | |
| Dritter Anlenkpunkt (Verbindung zwischen Sitzstrebe und Wippe) | x = 201 | y = 300 |
| | | |
| Befestigungspunkt der Wippe am Sitzrohr | x = 86 | y = 206 |
| | | |
| Verbindungspunkt zwischen der Wippe und dem Feder-Dämpfungselement | x = 27 | y = 259 |
| | | |
| Verbindungspunkt zwischen Rahmen und Feder-Dämpfungselement | x = -19 | y = 110 |
| | | |
| Erster Anlenkpunkt (Verbindung zwischen Sitzrohr und Kettenstrebe) | x = 12 | y = 38 |

Die vorgenannten Daten stellen ein besonders bevorzugtes Ausführungsbeispiel dar. Die Daten können in geringen Grenzen verändert werden, beispielsweise im Bereich von -5 bis +5 mm zu den jeweiligen Koordinaten.

Weitere Vorteile, Merkmale und Anwendungsmöglichkeiten ergeben sich aus der nachfolgenden Beschreibung eines Ausführungsbeispieles in Zusammenhang mit der Zeichnung. Darin zeigen:
- Figur 1: eine schematische Seitenansicht eines Mountainbike-Rahmens mit der erfindungsgemäßen Hinterbau-Federanordnung;
- Figur 2: eine vergrößerte Darstellung in einer Seitenansicht des Ausführungsbeispieles gemäß Figur 1;
- Figur 3: eine schematische Darstellung einer Kettenstrebe des Ausführungsbeispieles gemäß Figur 1;
- Figur 4: eine schematische Aufsicht auf die Sitzstreben des Ausführungsbeispieles gemäß Figur 1;
- Figur 5: eine schematische Seitenansicht der Wippe des Ausführungsbeispieles gemäß Figur 1;
- Figur 6: eine Aufsicht auf die Wippe gemäß Figur 5;
- Figur 7: eine schematische Schnittdarstellung durch ein Steuerrohr;
- Figur 8: eine schematische Seitenansicht des Ausfallendes des erfindungsgemäßen Rahmens;
- Figur 9: eine Aufsicht auf das Ausfallende gemäß Figur 8.

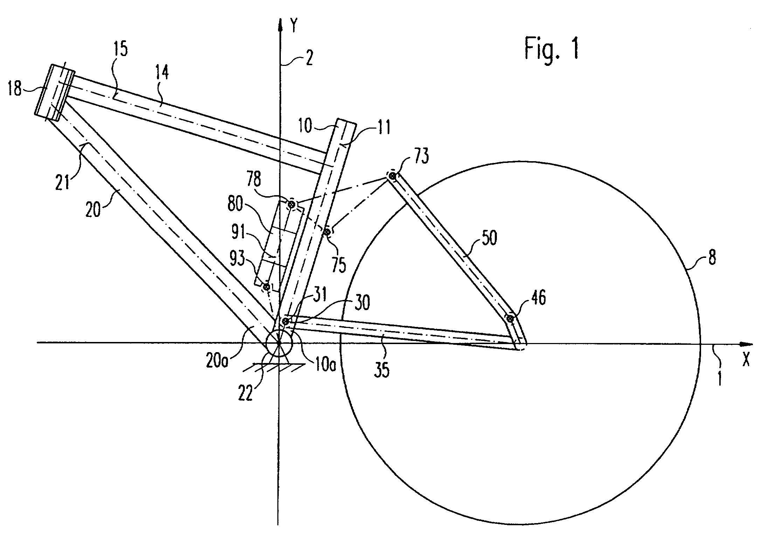

Ein bevorzugtes Ausführungsbeispiel des erfindungsgemäßen Fahrradrahmens wird nun in bezug auf die Figur 1 beschrieben.

Zur besseren Darstellung der einzelnen Anlenkpunkte ist der dort gezeigte Rahmen in bezug auf ein karthesisches Koordinatensystem angeordnet, bei welchem die Achse 1 die im wesentlichen horizontal verlaufende x-Achse bezeichnet und die Achse 2 die senkrecht dazu angeordnete, im wesentlichen vertikal verlaufende y-Achse.

Der gezeigte Fahrradrahmen besteht aus einem Sitzrohr 10, welches im wesentlichen zylindrisch gestaltet und symmetrisch zu einer längsverlaufenden Mittellinie 11 ist. Das Sitzrohr 10 ist um etwa 65° bis 75° zur Horizontalen geneigt, d. h., daß der Winkel den die Mittellinie 11 mit der x-Achse 1 einschließt, ungefähr diesem Betrag entspricht.

Das Sitzrohr 10 ist mit einem im wesentlichen zylindrischen Oberrohr 14 verbunden, welches ebenfalls im wesentlichen zylindrisch ist und das in einem Winkel von etwa 90° an das Sitzrohr anschließt. Das Oberrohr 14 ist wiederum mit einem Steuerrohr 18 verbunden, welches dazu vorgesehen ist, eine übliche Vorderradgabel, d. h. genauer gesagt das Gabelrohr einer solchen Vorderradgabel aufzunehmen. Bevorzugt ist das Steuerrohr 18 dafür vorgesehen, eine Federgabel aufzunehmen.

Das Steuerrohr 18 und das Sitzrohr 10 sind miteinander über ein im wesentlichen zylindrisches Unterrohr 20 verbunden, welches ebenfalls im wesentlichen zylindrisch ist und welches sich entlang einer Mittellinie 21 erstreckt.

Das Unterrohr. 20 und das Sitzrohr 10 sind an ihrem jeweiligen unteren Ende 20a und 10a mit einem im wesentlichen zylindrischen Tretlagergehäuse verbunden, welches rohrförmig gestaltet ist und dessen Mittelachse, die gleichzeitig die Drehachse des Tretlager und auch der Nullpunkt des Koordinatensystems darstellt, senkrecht zu der durch die Rohre 10, 14, 20 aufgespannten Ebene ist.

Das Unterrohr 20 ist vorzugsweise im unteren Bereich 20a abweichend von der zylindrischen Form gestaltet, und zwar im wesentlichen vierkantförmig mit stetigem Übergang, wodurch eine größere Verbindungsfläche zwischen den Rohrwänden und dem Tretlagergehäuse entsteht.

Der Rahmen ist insgesamt aus Leichtmetall gefertigt, vorzugsweise aus einer Legierung, welche Aluminium und/oder Titan enthält. Die Rohre sind vorzugsweise miteinander verschweißt. Die Rohre sind vorzugsweise konifiziert.

Statt der Aluminium- oder Titanlegierung kann auch ein Stahlrahmen verwendet werden, in diesem Fall wird vorzugsweise eine Hartlötung als Verbindung verwendet.

Am Sitzrohr 10 auf dem Mittellinie 11 und in geringem Abstand zum Tretlagergehäuse 22 ist ein erstes Drehgelenk 30 vorgesehen, welches den geometrischen Anlenkpunkt 31 definiert.

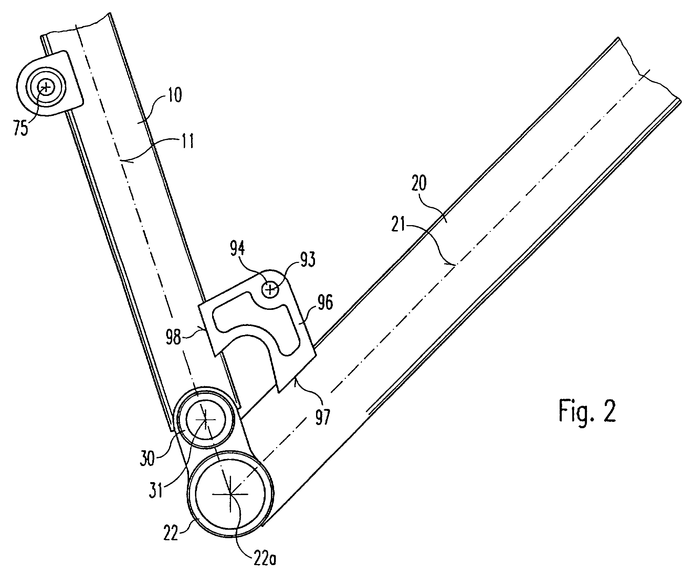

Wie aus der Figur 2 zu entnehmen ist, welche den Rahmen in der anderen Seitenansicht wie Figur 1 zeigt, ist der Anlenkpunkt 31 exakt auf der Mittellinie 11 und mit einem kleinen Abstand, beim Ausführungsbeispiel ca. 40 mm, zur Mittellinie und Drehachse 21 des Tretlagergehäuses 22 angeordnet.

Zwei, mit 35 bezeichnete Kettenstreben sind parallel zueinander drehbar an diesem ersten Anlenkpunkt 31 befestigt. Die drehbare Verbindung erfolgt mittels (nicht dargestellter) Nadellagern sowie mit zwei Axial-Wälzlagern, welche die axialen Kräfte aufnehmen.

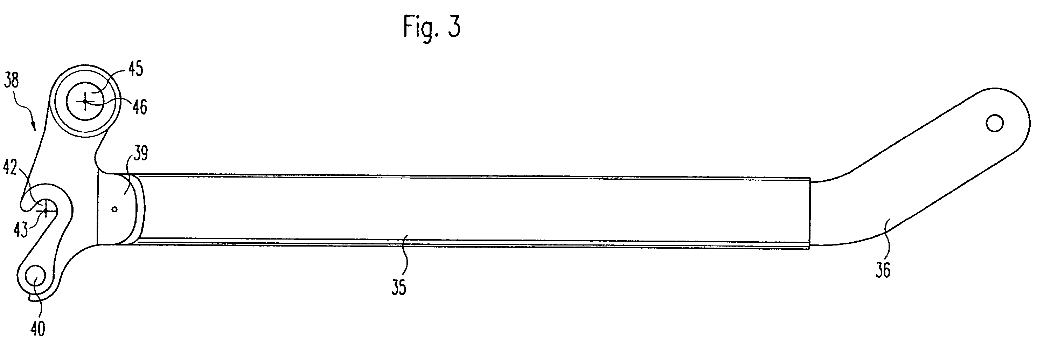

Die Kettenstrebe 35 weist in ihrem vorderen Bereich einen Verbindungsansatz 36 auf, durch welchen sie mit dem Drehgelenk verbunden ist sowie am entgegengesetzten Ende, d. h. vom ersten Anlenkpunkt 31 entfernt, ein Ausfallende 38. Dieses Ausfallende weist einen nach vorne ragenden Zapfen 39 auf, durch welchen es mit der Kettenstrebe 35 verbunden ist, und ist ansonsten einstückig gefertigt. Eine Bohrung 40 ist dafür vorgesehen, eine Schaltung aufzunehmen und eine Vertiefung 42 dient zur Aufnahme der Achse des Hinterrades. Das Hinterachsrad dreht sich um den Mittelpunkt der Bohrung 42, d. h. um die sich senkrecht zur Zeichenebene der Figur 3 erstreckende Achse 43.

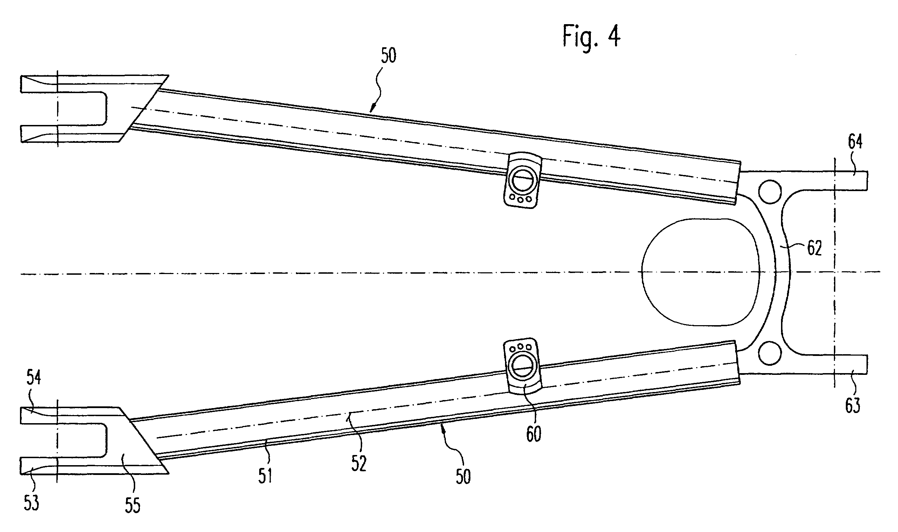

Im Abstand zu dieser Achse, und zwar beim Ausführungsbeispiel in einem Abstand von ca. 46 mm in Richtung der y-Achse, ist eine Bohrung 45 vorgesehen, deren Mittelachse 46 den zweiten Anlenkpunkt definiert. Über die Bohrung 45 ist das Ausfallende 38 mit den Sitzstreben 50 verbunden, welche in der Figur 4 in einer Aufsicht gezeigt sind.

Jede der beiden Sitzstreben 50 besteht aus einem insgesamt rohrförmigen Körper 51, welcher sich entlang einer Mittellinie 52 erstreckt.

Am unteren Ende des Rohrs, d. h. an dem der Achse des Hinterrades zugewandten Ende, ist jeweils eine Drehverbindungseinrichtung 52 vorgesehen, welche zwei parallel zueinander angeordnete Laschen 53, 54 aufweist, die im montierten Zustand zu beiden Seiten des Ausfallendes 38 angeordnet sind.

Über die Drehverbindung 52 sind die Sitzstreben 50 drehbar mit der Bohrung 45 verbunden.

An den Sitzstreben 50 befinden sich in herkömmlicher Weise angeordnete Stifte 60, welche zur Aufnahme herkömmlicher Bremsen, beispielsweise vom Cantilevertyp, vorgesehen sind.

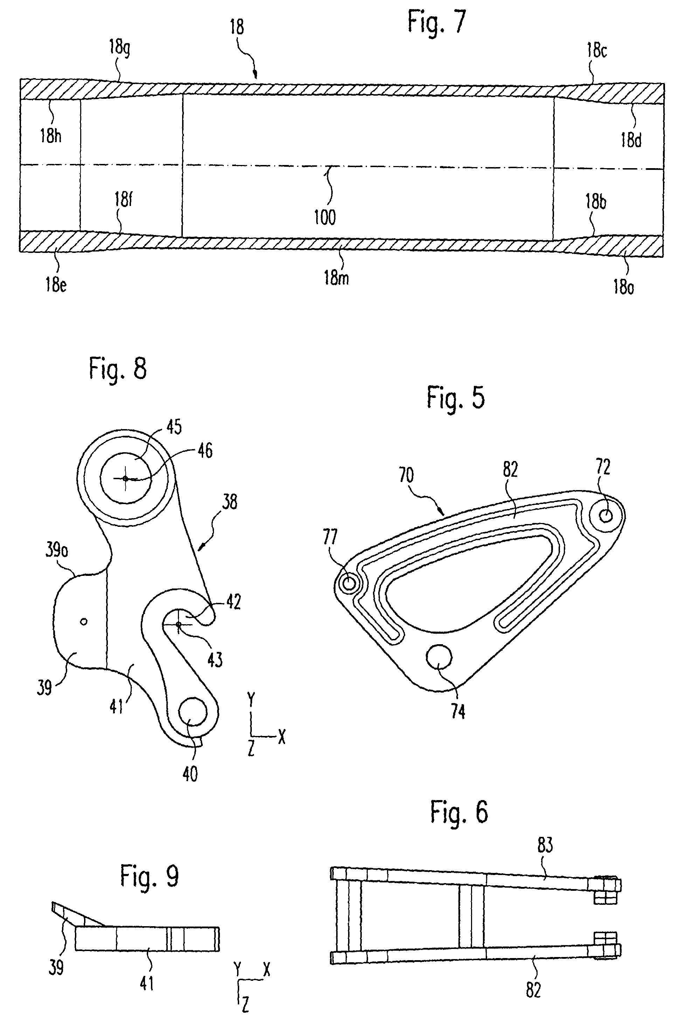

An ihrem oberen Ende sind die Sitzstreben über ein Verbindungsbauteil 62 miteinander verbunden, welches zwei Verbindungslaschen 63, 64 aufweist, über die die Sitzstreben mit einer Wippe 70 verbunden sind. Diese Wippe (siehe Figur 5 und 6) ist (in der Seitenansicht) im wesentlichen dreieckig gestaltet und definiert mit der Bohrung 72 den dritten Anlenkpunkt 73, der gleichzeitig auch der erste Wippenanlenkpunkt ist.

Eine Bohrung 74 definiert den zweiten Wippenanlenkpunkt 75, durch welchen die Wippe gelenkig mit dem Sitzrohr 10 verbunden ist und eine Bohrung 77 einen Wippenanlenkpunkt 78, durch welchen die Wippe mit einer Feder-Dämpfungselement 80 verbunden ist.

Die Wippe besteht, wie aus den Figuren 5 und 6 ersichtlich, im wesentlichen aus zwei Formteilen 82, 83, die im wesentlichen spiegelbildlich symmetrisch zueinander aufgebaut sind. Der durch das Gelenk 74 gebildete Anlenkpunkt 75 ist, wie insbesondere aus der Figur 2 ersichtlich, hinter dem Sitzrohr 10 in Richtung auf den Hinterbau hin angeordnet.

Der Abstand zwischen dem am Sitzrohr angeordneten Wippenanlenkpunkt und dem Anlenkpunkt 31 der Kettenstreben am Sitzrohr beträgt vorzugsweise in etwa 180 mm bzw. der Abstand zur Tretlager-Drehachse ca, 220 mm, wenn Tretlagerachse und erster Anlenkpunkt um 40 mm gegeneinander versetzt sind.

Der dritte Wippenanlenkpunkt 78 ist mit einer Feder-Dämpfungseinrichtung 80 herkömmlicher Bauart verbunden. Diese Feder-Dämpfungseinrichtung weist eine außenliegende Schraubenfeder auf sowie einen innenliegende Dämpfungseinrichtung auf, welche mit einer Luft- oder Öldämpfung arbeitet.

Wie aus der Zeichnung in Figur 1 zu erkennen ist, ist die Mittellinie 91 der Feder-Dämpfungseinrichtung 80 im wesentlichen parallel zur Mittellinie 11 des Sitzrohrs 10.

Die Feder-Dämpfungseinrichtung 80 ist über einen weiteren Anlenkpunkt 93 mit dem Rahmen verbunden.

Dieser Anlenkpunkt 93 wird, wie am besten aus der Figur 2 ersichtlich, durch eine Bohrung 94 definiert, welche an zwei Platten 96 vorgesehen ist, die parallel zueinander, sowohl mit dem Sitzrohr als auch mit dem Unterrohr verbunden sind. Die beiden Platten (in der Seitenansicht gemäß Figur 2 ist nur eine Platte zu erkennen) sind im wesentlichen dreieckförmig gestaltet und weisen einen ersten Kontaktbereich 97 auf, mit welchem sie mit dem Unterrohr verbunden sind, und einen zweiten Kontaktbereich 98, mit welchem sie mit dem Sitzrohr 10 verbunden sind. Die Kanten der Kontaktbereiche 97, 98 verlaufen in etwa parallel zur jeweiligen Mittellinie 11 bzw. 15 des Sitzrohres bzw. des Unterrohres.

Wie bereits ausgeführt, erfolgt die Verbindung im ersten Anlenkpunkt 30 und im zweiten Anlenkpunkt 46 über separate Radial- und Axiallager, d. h., das radial wirkende und das axial wirkende Kräfte gesondert aufgenommen werden. In beiden Anlenkpunkten werden zur Verminderung des Stick-Slip-Effektes Wälzlager verwendet, wodurch sich sehr geringe Reibkräfte ergeben, die das Federungs-Verhalten nur geringfügig beeinflussen.

Die Verbindungen der drei Wippenanlenkpunkte und auch die Verbindung im Anlenkpunkt 93 folgt mit Kugelgelenken, die individuell auf den jeweiligen Rahmen eingestellt werden. Dadurch ist es möglich, die Hinterradaufhängung spannungsfrei zu gestalten, ohne daß die Aufhängung an Seitenführungs-Stabilität einbüßt.

Die Rahmenteile des dargestellten Ausführungsbeispieles sind vollständig aus einer Aluminiumlegierung hergestellt, die starren Verbindungen sind miteinander verschweißt. Statt einer Aluminiumlegierung können auch andere Metalle verwendet werden, wie beispielsweise eine Titan- oder auch eine Stahllegierung. Entsprechend dem gewählten Material werden dann die Verbindungen, was aber auch bei einer Aluminiumlegierung möglich ist, nicht mehr verschweißt, sondern hart gelötet, oder auch verklebt.

Außer aus einer Metallegierung kann der Rahmen auch aus Kunststoff bestehen, wobei dann vorzugsweise mit Glasfaser oder insbesondere mit Karbonfaser verstärkter Kunststoff Verwendung findet. In diesem Fall werden die Rahmenteile an ihren starren Verbindungspunkten entweder miteinander verklebt oder unmittelbar einstückig beim Herstellungsvorgang miteinander verbunden.

Bei der Verwendung einer Metallegierung als Rohrmaterial werden die Rohre vorzugsweise, wie im Stand der Technik bekannt, konifiziert.

Eine besondere Gestaltung des Steuerrohres des Ausführungsbeispieles wird nun in Verbindung mit der Figur 7 erläutert.

Dieses Ausführungsbeispiel des Steuerrohres 18 ist besonders dafür vorgesehen, mit einem Rahmen, wie er in Figur 1 dargestellt ist, verwendet zu werden. Es wird jedoch ausdrücklich darauf hingewiesen, daß dieses Steuerrohr auch mit anderen Rahmen Verwendung finden kann und auch mit Rahmen, welche eine andere Hinterbaufederung oder keine Hinterbaufederung aufweisen und sowohl mit Vorderradgabeln, welche eine Federung aufweisen, als auch mit Vorderradgabeln, die eine solche Federung nicht aufweisen.

Das gezeigte Steuerrohr ist insgesamt rotationssymmetrisch um eine Rotations-Symmetrielinie 100 gestaltet und ist an beiden Enden konifiziert.

Am ersten Ende 18a ist ein im wesentlichen konischer Übergangsbereich 18b vorgesehen, durch welchen sich die zylindrische Form nach innen verjüngt.

Der äußere Bereich 18c ist ebenfalls einer konischen Durchmesser-Veränderung unterworfen, und zwar zu einem Durchmesser, der sich nach außen hin erweitert. Lediglich der Absatz 18d ist zylindrisch gestaltet.

In entsprechender Weise ist an dem zweiten Ende 18e im inneren Bereich ein erster konischer Übergangsbereich 18f vorgesehen, durch den sich der Innendurchmesser verengt und ein zweiter, im wesentlichen konischer Bereich 18g, durch welchen sich der Außendurchmesser vergrößert. Auch hier ist ein zylindrischer Bereich 18h vorgesehen.

Im Mittelbereich 18m beträgt der Außendurchmesser des Rohres 40 mm und der Innendurchmesser des Rohres 35,6 mm.

Im Bereich 18c und 18h erweitert sich der Außendurchmesser auf 42 mm.

Der zylindrische Innendurchmesser im Bereich 18d und 18e ist jeweils 33 mm.

Durch diese Gestaltung wird eine Konifizierung erreicht, die weitaus besser als bisher übliche Konifizierungen an den Spannungsverlauf im Steuerrohr angepaßt ist.

Die Figuren 8 und 9 zeigen eine Detaildarstellung des Ausfallendes, welches bei diesem Ausführungsbeispiel verwendet wird.

Das Ausfallende (in Figur 8 ist das rechte Ausfallende dargestellt) ist gefräst oder geschmiedet und besteht aus einem Basisteil 41, in welchen die Bohrung 40 zur Aufnahme der Schaltung und die Vertiefung 43 zur Aufnahme der Hinterachse vorgesehen ist.

Einstückig mit diesem Basisteil 41 ist ein nach innen weisender Zapfen 39 verbunden, welcher mit der Kettenstrebe verschweißt wird. Der Zapfen 39 ist in der Aufsicht gemäß Figur 8 im wesentlichen rechteckförmig gestaltet, wobei die längere Rechteckseite quer zur Längsrichtung der Kettenstrebe im montierten Zustand ist und wobei die der Kettenstrebe zugewandte Rechteckseite mit großzügigen Abrundungen 42 versehen ist.

Diese Gestaltung des Ausfallendes bringt eine hohe Stabilität und eine zuverlässige Verbindung sowohl mit der Kettenstrebe, als auch mit der Hinterachse und mit dem Gelenk.

Da sich die Bohrung für die Aufnahme der Radachse nach hinten unten öffnet, ist die Verbindung hinsichtlich der von der Kette ausgeübten Zugkräfte und hinsichtlich der durch das Fahrergewicht ausgeübten Kräfte sehr zuverlässig.

Nachfolgend wird die Funktion des erfindungsgemäß Fahrradrahmens beschrieben:

Der Fahrradrahmen wird in üblicher Weise montiert, wobei in den Ausfallenden 38 ein, in Figur 1 schematisch angedeutetes Hinterrad 8 aufgenommen ist.

Der Rahmen wird in üblicher Weise mit (nicht dargestellten) Komponenten komplettiert, d. h. insbesondere mit einer Federgabel, deren Gabelrohr im Steuerrohr 18 aufgenommen ist, einem darin angeordneten Vorderrad, einem mit dem Gabelrohr verbundenen Vorbau, ein mit diesem verbundenen Lenker, einem Tretlager, an welchem Tretkurbel und Pedalen befestigt sind sowie mit Bremsen, einer Kettenschaltung, am Lenker angeordnete Bremsgriffen usw..

Die Feder-Dämpfungseinrichtung ist vorzugsweise einstellbar, so daß sie dem Gewicht des Fahrers bzw. den Erfordernissen des Geländes angepaßt werden kann.

Sobald der Rahmen mit dem Fahrergewicht belastet wird, wird das Sitzrohr nach unten in Richtung auf das Tretlager gedrückt und der Hinterrad-Aufnahmepunkt des Ausfallendes nach oben in der Zeichnung nach Figur 1 gedrückt.

Die Einstellung des Feder-Dämpfungselementes 80 erfolgt in der Weise, daß beim Fahrergewicht eine gewünschte Vorspannung entsteht.

Wenn sich, infolge der Fahrdynamik, die durch das Fahrergewicht auf die Kettenstrebe und die Sitzstrebe wirkende Kraft verringert, wird die Feder-Dämpfungseinrichtung entlastet und der Hinterrad-Anlenkpunkt wird nach unten in Figur 1 gedrückt. Dabei wird auch bei schlechten Fahrbahnverhältnissen der Kontakt zwischen Hinterrad und Fahrbahn gewährleistet.

Bei auf das Hinterrad wirkenden stoßartigen Belastungen wird das Hinterrad nach oben gedrückt. Dadurch erfährt der Hinterrad-Anlenkpunkt eine Bewegung nach oben, die, wie auch die Bewegung nach unten, in einer Kreisbahn um den Anlenkpunkt 31 erfolgt. Die Bewegung nach oben wird über den Anlenkpunkt 46 und den Anlenkpunkt 73 auf die Wippe übertragen. Die Wippe dreht sich dabei (in der Darstellung gemäß Figur 1) entgegen dem Uhrzeigersinn und belastet das Feder-Dämpfungselement.

Durch die vorstehend erörterte besondere geometrische Auslegung des Rahmens wird ein besonders gutes und komfortables Ansprechen der Hinterradfederung auf Fahrbahnunebenheiten erreicht. Gleichzeitig wird, durch die Geometrie einerseits und durch die verwendeten Lagerverbindungen andererseits eine stabile Führung des Hinterrades erreicht.

## Patentansprüche

1. Fahrradrahmen mit
einem Sitzrohr (11), dessen oberes Ende zur Aufnahme einer Sattelstütze vorgesehen ist und an dessen unterem Ende ein Tretlagergehäuse (22) angeordnet ist,
einem Paar von Kettenstreben (35), welche im wesentlichen parallel zueinander angeordnet sind und welche jeweils mit ihrem vorderen Ende drehbar an einem ersten Anlenkpunkt (31) angelenkt sind, der an diesem Sitzrohr in einem vorbestimmten Abstand zu diesem Tretlagergehäuse (22) angeordnet ist,
einem Paar von im wesentlichen parallel zueinander angeordneten Sitzstreben (50), welche jeweils mit einem ersten Ende an einem zweiten Anlenkpunkt (46) an diesen Kettenstreben drehbar angelenkt sind, wobei dieser zweite Anlenkpunkt (46) im Bereich von Ausfallenden, welche zur Aufnahme eines Hinterrades dienen, angeordnet ist,
einer Wippe (82, 83), welche drei Wippenanlenkpunkte (73, 75, 78) aufweist, nämlich einen ersten Wippenanlenkpunkt (73), an dem jeweils ein zweites Ende dieser Sitzstreben angelenkt ist,
einem zweiten Wippenanlenkpunkt (75), an dem diese Wippe drehbar mit diesem Sitzrohr verbunden ist, und zwar in einem Bereich, der zwischen diesem ersten Anlenkpunkt (31) und diesem oberen Ende des Sitzrohres liegt,
einem dritten Wippenanlenkpunkt (78), der gelenkig mit einem ersten Ende einer Feder-Dämpfungseinrichtung (80) verbunden ist, deren zweites Ende (93) an diesem Rahmen festgelegt ist,
dadurch gekennzeichnet,
daß mit dem hinteren Ende dieser Kettenstreben diese Ausfallenden (38) zur Aufnahme einer Hinterradachse fest verbunden sind.

2. Fahrradrahmen gemäß Anspruch 1, dadurch gekennzeichnet,
daß dieser vorbestimmte Abstand (31-22A) zwischen 20 mm und 60 mm, vorzugsweise zwischen 30 mm und 50 mm und besonders bevorzugt zwischen 35 mm und 45 mm beträgt.

3. Fahrradrahmen gemäß Anspruch 1 oder 2, dadurch gekennzeichnet,
daß dieser erste Anlenkpunkt (31) im wesentlichen im Bereich einer Mittellinie (11) dieses Sitzrohres (10) angeordnet ist.

4. Fahrradrahmen gemäß mindestens einem der vorhergehenden Ansprüche, dadurch gekennzeichnet,
daß in wenigstens einem dieser Anlenkpunkte (31, 46, 73, 75, 78, 93) ein Nadellager zur Übertragung von Radialkräften vorgesehen ist.

5. Fahrradrahmen gemäß mindestens einem der vorhergehenden Ansprüche, dadurch gekennzeichnet,
daß in mindestens einem dieser Anlenkpunkte (31, 46, 73, 75, 78, 93) ein Axial-Wälzlager vorgesehen ist.

6. Fahrradrahmen gemäß mindestens einem der vorhergehenden Ansprüche, dadurch gekennzeichnet,
daß in mindestens einem dieser Anlenkpunkte (31, 46, 73, 75, 78, 93) ein Kugelgelenk vorgesehen ist.

7. Fahrradrahmen gemäß mindestens einem der vorhergehenden Ansprüche, dadurch gekennzeichnet,
daß diese Feder-Dämpfungseinrichtung (80) im wesentlichen zylindrisch gestaltet ist, wobei als Federeinrichtung vorzugsweise eine Schraubenfeder vorgesehen ist.

8. Fahrradrahmen gemäß Anspruch 7, dadurch gekennzeichnet,
daß diese Feder-Dämpfungseinrichtung (80) im wesentlichen parallel zum Sitzrohr (10) angeordnet ist.

9. Fahrradrahmen gemäß mindestens einem der vorhergehenden Ansprüche, dadurch gekennzeichnet,
daß eine Befestigungseinrichtung (96) vorgesehen ist, welche wenigstens mit diesem Sitzrohr (10) verbunden ist und an welcher dieses zweite Ende (93) dieser Feder-Dämpfungseinrichtung (80) angeordnet ist.

10. Fahrradrahmen gemäß mindestens einem der vorhergehenden Ansprüche, dadurch gekennzeichnet,
daß dieses Sitzrohr (10) im Bereich dieses Tretlagergehäuses (22) mit einem Unterrohr (20) verbunden ist.

11. Fahrradrahmen gemäß Anspruch 9 und 10, dadurch gekennzeichnet,
daß diese Befestigungseinrichtung (96) sowohl an diesem Sitzrohr (10) als auch an diesem Unterrohr (20) befestigt ist.

12. Fahrradrahmen gemäß Anspruch 11, dadurch gekennzeichnet,
daß diese Befestigungseinrichtung (96) zwei parallele Platten (96) aufweist.

13. Fahrradrahmen gemäß mindestens einem der vorhergehenden Ansprüche, dadurch gekennzeichnet,
daß der erste Anlenkpunkt (31) hinsichtlich einer Bezugsebene, welche die Tretlagerachse (22a) und eine Drehachse (43) eines in dem Ausfallende (38) aufzunehmenden Hinterrades schneidet, im Auslegungszustand einen parallel zu dieser Bezugsebene gemessenen Abstand von der Tretlager-Drehachse von ca. 12 mm und einen senkrecht zu dieser Bezugsebene gemessene Abstand von ca. 38 mm aufweist.

14. Fahrradrahmen gemäß Anspruch 13, dadurch gekennzeichnet,
daß im Auslegungszustand der Abstand des zweiten Anlenkpunktes (46) zur Tretlagerachse (22a) ca. 413 mm parallel zur Bezugsebene und ca. 47 mm senkrecht zur Bezugsebene beträgt.

15. Fahrradrahmen gemäß Anspruch 13 oder 14, dadurch gekennzeichnet,
daß im Auslegungszustand der Abstand des dritten Anlenkpunktes (73) und des ersten Wippenanlenkpunktes (73) zur Tretlagerachse (22a) parallel zur Bezugsebene ca. 201 mm und senkrecht zur Bezugsebene ca. 300 mm beträgt.

16. Fahrradrahmen gemäß mindestens einem der Ansprüche 13 bis 15, dadurch gekennzeichnet,
daß im Auslegungszustand der Abstand des zweiten Wippenanlenkpunktes (75) zur Tretlagerachse (22a) parallel zu dieser Bezugsebene ca. 86 mm und senkrecht zu dieser Bezugsebene ca. 205 mm beträgt.

17. Fahrradrahmen gemäß mindestens einem der Ansprüche 13 bis 16, dadurch gekennzeichnet,
daß der Abstand des dritten Wippenanlenkpunktes (78) zur Tretlagerachse (22a) im Auslegezustand parallel zur Bezugsebene ca. 19 mm, und zwar in einer Richtung entgegengesetzt zum Anlenkpunkt (31) des Hinterrades beträgt und ca. 110 mm senkrecht zu dieser Bezugsebene.

## Claims

1. Bicycle frame with
A seat tube (11), whose top end is provided to take a saddle pillar and on whose lower end a bottom bracket bar housing (22) is provided,
a pair of chain supports (35), which are positioned essentially in parallel with one another and which are pivoted rotationally in each instance with their front end at a first pivoting point (31), which is positioned on this seat tube at a predetermined distance from this bottom bearing bar housing (22),
a pair of seat supports (50) positioned essentially in parallel with one another, which are each pivoted rotationally with a first end on a second pivoting point (46) on this chain support (46) in the area of AUSFALL ends, which is provided to hold a back wheel,
a rocker (82, 83), which exhibits three rocker pivoting points (73, 75, 78), namely a first rocker pivoting point (73), on which in each instance a second end of this seat support is pivoted,
a second rocker pivoting point (75), on which this rocker is connected rotationally with this seat tube, and indeed in an area, which lies between this first pivoting point (31) and this top end of the seat tube,
a third rocker pivoting point (78), which is flexibly connected with a first end of a spring damping unit (80), whose second end (93) is fixed on this frame,
characterized in that
with the back end of this chain support these AUSFALL ends (38) are firmly connected for holding of a back wheel axle.

2. Bicycle frame in accordance with claim 1, characterized in that this pre-determined distance (31-22A) is between 20 mm and 60 mm, preferably between 30 mm and 50 mm and particularly preferably between 35 and 45 mm.

3. Bicycle frame in accordance with claim 1 or 2, characterized in that this first pivoting point (31) is essentially positioned in the area of a centre line (11) of this seat tube (10).

4. Bicycle frame in accordance with at least one of the previous claims, characterized in that in at least one of these pivoting points (31, 46, 73, 75, 78, 93) a needle bearing is provided for the transfer of radial forces.

5. Bicycle frame in accordance with at least one of the previous claims, characterized in that in at least one of these pivoting points (31, 46, 73, 75, 78, 93) an axial roller bearing is provided.

6. Bicycle frame in accordance with at least one of the previous claims, characterized in that in at least one of these pivoting points (31, 46, 73, 75, 78, 78, 93) a ball pivot is provided.

7. Bicycle frame in accordance with at least one of the previous claims, characterized in that this spring damping unit (80) has an essentially cylindrical form, whereby a coil spring is preferably provided as a spring unit.

8. Bicycle frame in accordance with claim 7, characterized in that this spring damper unit (80) is positioned essentially in parallel with the seat tube (10).

9. Bicycle frame in accordance with at least one of the previous claims, characterized in that a fastening unit (96) is provided, which is connected at least with this seat tube (10) and on which this second end (93) this spring damping unit (80) is positioned.

10. Bicycle frame in accordance with at least one of the previous claims, characterized in that this seat tube (10) is connected with a lower tube (20) in the area of the bottom bracket bar housing (22).

11. Bicycle frame in accordance with claim 9 and 10, characterized in that this fastening unit (96) is fixed both to this seat tube (10) and also to this lower tube (20).

12. Bicycle frame in accordance with claim 11, characterized in that this fastening unit (96) exhibits two parallel plates (96).

13. Bicycle frame in accordance with at least one of the previous claims, characterized in that the first pivoting point (31), in respect of one plane of reference, which cuts the bottom bracket bar axle (22a) and a turning axle (43) of a back wheel being held the AUSFALL end (38), exhibits, in the designed state, a distance of approx. 12 mm measured parallel from the bottom bracket bar axle and a distance of approx. 38 mm measured vertical to this plane of reference.

14. Bicycle frame in accordance with claim 13, characterized in that, in the designed state, the distance of the second pivoting point (46) from the bottom bracket bar axle (22a) is approx. 413 mm parallel to the plane of reference and approx. 47 mm vertical to the plane of reference.

15. Bicycle frame in accordance with claim 13 or 14, characterized in that, in the designed state, the distance of the third pivoting point (73) and the first rocker pivoting point (73) from the bottom bracket bar axle (22a) parallel to the plane of reference is approx. 201 mm and vertical to the plane of reference approx. 300 mm.

16. Bicycle frame in accordance with at least one of claims 13 to 15, characterized in that ,in the designed state, the distance of the second rocker pivoting point (75) to the bottom bracket bar axle (22a) parallel to the plane of reference is approx. 86 mm and vertical to this plane of reference approx. 205 mm.

17. Bicycle frame in accordance with at least one of claims 13 to 6, characterized in that the distance of the third rocker pivoting point (78) to the bottom bracket bar axle (22a), in the designed state, parallel to the plane of reference is approx. 19 mm and indeed in a direction contrary to the pivoting point (31) of the back wheel, and approx. 110 mm vertical to this plane of reference.

## Revendications

1. Cadre de bicyclette, comportant :
un tube de selle (11) dont l'extrémité supérieure est prévue pour recevoir un tube porte-selle et sur l'extrémité inférieure duquel est agencé un carter de pédalier (22),
une paire de tirants de chaîne (35) qui sont agencés sensiblement parallèles l'un à l'autre et qui sont articulés en rotation avec leur extrémité antérieure respective à un premier point d'articulation (31) qui est agencé sur ledit tube de selle à un écartement prédéterminé par rapport audit carter de pédalier (22),
une paire de tirants de selle (50) agencés sensiblement parallèles l'un par rapport à l'autre, qui sont articulés en rotation avec une première extrémité respective à un second point d'articulation (46) sur lesdits tirants de chaîne, ledit second point d'articulation (46) étant agencé dans la région des extrémités de dégagement qui servent à la réception d'une roue arrière,
une bascule (82, 83) qui présente trois points d'articulation de bascule (73, 75, 78), à savoir un premier point d'articulation de bascule (73) sur lequel est articulée une seconde extrémité respective desdits tirants de selle,
un second point d'articulation de bascule (75) auquel ladite bascule est reliée en rotation avec ledit tube de selle, et ceci dans une région qui se trouve entre ledit premier point d'articulation (31) et ladite extrémité supérieure du tube de selle,
un troisième point d'articulation (78) qui est relié de manière articulée avec une première extrémité d'un dispositif d'amortissement à ressort (80), dont la seconde extrémité (93) est fixée sur ledit cadre,
caractérisé en ce que
lesdites extrémités de dégagement (38) destinées à recevoir un axe de roue arrière sont reliées de manière solidaire avec l'extrémité postérieure desdits tirants de chaîne.

2. Cadre de bicyclette selon la revendication 1, caractérisé en ce que ledit écartement prédéterminé (31-22A) est compris entre 20 mm et 60 mm, de préférence entre 30 mm et 50 mm, et de préférence particulière entre 35 mm et 45 mm.

3. Cadre de bicyclette selon l'une ou l'autre des revendications 1 et 2, caractérisé en ce que ledit premier point d'articulation (31) est agencé sensiblement dans la région d'une ligne médiane (11) dudit tube de selle (10).

4. Cadre de bicyclette selon au moins l'une quelconque des revendications précédentes, caractérisé en ce qu'il est prévu un palier à aiguilles sur l'un au moins desdits points d'articulation (31, 46, 73, 75, 78, 93) pour transmettre des forces radiales.

5. Cadre de bicyclette selon au moins l'une quelconque des revendications précédentes, caractérisé en ce qu'il est prévu un palier à roulement axial sur l'un au moins desdits points d'articulation (31, 48, 73, 75, 78, 93).

6. Cadre de bicyclette selon au moins l'une quelconque des revendications précédentes, caractérisé en ce qu'il est prévu une articulation à rotule sur l'un au moins desdits points d'articulation (31, 48, 73, 75, 78, 93).

7. Cadre de bicyclette selon au moins l'une quelconque des revendications précédentes, caractérisé en ce que ledit dispositif d'amortissement à ressort (80) est réalisé sensiblement cylindrique, le ressort prévu étant de préférence un ressort hélicoïdal.

8. Cadre de bicyclette selon la revendication 7, caractérisé en ce que le dispositif d'amortissement à ressort (80) est agencé sensiblement parallèle au tube de selle (10).

9. Cadre de bicyclette selon au moins l'une quelconque des revendications précédentes, caractérisé en ce qu'il est prévu un dispositif de fixation (96) qui est relié au moins avec ledit tube de selle (10) et sur lequel est agencée la seconde extrémité (93) dudit dispositif d'amortissement à ressort (80).

10. Cadre de bicyclette selon au moins l'une quelconque des revendications précédentes, caractérisé en ce que ledit tube de selle (10) est relié à un tube inférieur (20) dans la région dudit carter de pédalier (22).

11. Cadre de bicyclette selon les revendications 9 et 10, caractérisé en ce que ledit dispositif de fixation (96) est fixé non seulement audit tube de selle (10) mais aussi audit tube inférieur (20).

12. Cadre de bicyclette selon la revendication 11, caractérisé en ce que le dispositif de fixation (96) présente deux plaques (96) parallèles.

13. Cadre de bicyclette selon au moins l'une quelconque des revendications précédentes, caractérisé en ce que par rapport à un plan de référence qui coupe l'axe de pédalier (22a) et qui coupe un axe de rotation (43) d'une roue arrière destinée à être reçue dans l'extrémité de dégagement (38), le premier point d'articulation (31) présente à l'état de montage, un écartement d'environ 12 mm par rapport à l'axe de rotation de pédalier, mesuré parallèlement à ce plan de référence, et un écartement d'environ 38 mm, mesuré perpendiculairement à ce plan de référence.

14. Cadre de bicyclette selon la revendication 13, caractérisé en ce qu'à l'état de montage, l'écartement entre le second point d'articulation (46) et l'axe de pédalier (22a) est d'environ 413 mm parallèlement au plan de référence, et d'environ 47 mm perpendiculairement au plan de référence.

15. Cadre de bicyclette selon l'une ou l'autre des revendications 13 et 14, caractérisé en ce qu'à l'état de montage, l'écartement du premier point d'articulation (73) et du premier point d'articulation de bascule (78) par rapport à l'axe de pédalier (22a) est d'environ 201 mm parallèlement au plan de référence, et d'environ 300 mm perpendiculairement au plan de référence.

16. Cadre de bicyclette selon au moins l'une quelconque des revendications 13 à 15, caractérisé en ce qu'à l'état de montage, l'écartement du second point d'articulation de bascule (75) par rapport à l'axe de pédalier (22a) est d'environ 86 mm parallèlement audit plan de référence, et d'environ 205 mm perpendiculairement audit plan de référence.

17. Cadre de bicyclette selon au moins l'une quelconque des revendications 13 à 16, caractérisé en ce que l'écartement entre le troisième point d'articulation de bascule (78) et l'axe de pédalier (22a) est, à l'état de montage, d'environ 19 mm parallèlement au plan de référence, et ceci dans une direction opposée au point d'articulation (31) de la roue arrière, et d'environ 110 mm perpendiculairement à ce plan de référence.
